# EUROPEAN PATENT APPLICATION

(11) **EP 4 080 078 A1**
(43) Date of publication of application: **26.10.2022**
(21) Application number: 21170250.1
(22) Date of filing: 23.04.2021
(51) Int. Cl.: F16D 55/226, F16D 65/18, F16H 25/20, F16D 125/40, F16D 121/24

(54) **BRAKING SYSTEM AND VEHICLE WITH BRAKING SYSTEM**

(71) Applicant: KNORR-BREMSE Systeme für Nutzfahrzeuge GmbH, 80809 München (DE)
(72) Inventor: HOLLOSI, Mate, 1097 Budapest (HU); KLINGNER, Matthias, 82275 Emmering (DE); BLESSING, Michael, 80687 München (DE); PESCHEL, Michael, 82296 Schöngeising (DE); GYÖRKE, Zsombor, 8360 Keszthely (HU); MLINARCSEK, Csaba, 1165 Budapest (HU); SCHALLER, Sebastian, 86462 Langwied (DE); STANKOVIC, Dordo, 81929 München (DE); SZABO, Janos, 1042 Budapest (HU); KOKREHEL, Csaba, 1119 Budapest (HU); HÖS, Levente, 1047 Budapest (HU); MONORI, Gyula, 6065 Lakitelek (HU); KRÜGER, Sven Philip, 81476 München (DE); SCHÖPFBERGER, Tobias, 84048 Mainburg (DE)

(57) **Abstract**

The invention relates to a braking system and a vehicle with braking system and in particular relates to 2 such black system and vehicular with black system wherein the break actuation speed is variable. According to an aspect of the invention, disclosed is a braking system for a commercial vehicle, comprising: a transfer element movable between a brake position and a release position, the transfer element being configured to set a wheel braking mechanism in a braking state and to release the wheel braking mechanism in the release position, a first actuation interface configured to receive a rotatory driving force, a second actuation interface configured to receive a rotatory driving force, a transformation unit arranged between the transfer element and the first actuation interface, wherein the transformation unit is configured to transform the rotatory driving force received by the first actuation interface into a translational displacement of the transfer element and a brake force Fb, and to alter the transformation ratio of the rotatory driving force received by the first actuation interface into a translational displacement of the transfer element in accordance to the rotational speed of the second actuation interface.

## Description

The invention relates to a braking system and a vehicle with such braking system and in particular relates to such brake system and vehicular with brake system wherein the brake actuation speed is variable.

Commercial vehicles, like trucks, tractor units or trailers, comprise braking systems capable of applying braking forces to hubs or wheels to decelerate the commercial vehicles during a driving operation or to secure the commercial vehicles against an unintended movement during non-driving operations. Such braking systems usually consist of a main brake system and a secondary braking system. Usually, the secondary braking system serves as a backup braking system for the main braking system or provides a continuous locking function to maintain vehicle's position.

Such braking systems and respective brake actuators are arranged near the hub or wheel to be decelerated or secured. However, the installation space near the hub or wheel is limited.

In commercial vehicles as well as in trailers for commercial vehicles there are space constraints near the hubs and the wheels, not allowing installation of voluminous braking systems or actuators. In particular, if a high transmission ratio of brake forces is required, the corresponding brake systems require extensive space.

It is therefore an object of the invention to provide a braking system with a high transmission rate that exhibits low spatial demands.

The object of the invention is solved by the subject matter of independent claims. Further advantageous developments are subject matter of the dependent claims.

According to an aspect of the invention, disclosed is a braking system for a commercial vehicle, comprising: a transfer element movable between a brake position and a release position, the transfer element being configured to set a wheel braking mechanism in a braking state and to release the wheel braking mechanism in the release position, a first actuation interface configured to receive a rotatory driving force, a second actuation interface configured to receive a rotatory driving force, a transformation unit arranged between the transfer element and the first actuation interface, wherein the transformation unit is configured to transform the rotatory driving force received by the first actuation interface into a translational displacement of the transfer element and a brake force Fb, and to alter the transformation ratio of the rotatory driving force received by the first actuation interface into a translational displacement of the transfer element in accordance to the rotational speed of the second actuation interface.

This allows providing a braking system having an adjustable braking force independent from the force applied by an actuating device.

Preferably, the transfer element is movable from the release position to the braking position in a first direction and from the braking position to the release position in a second direction obverse to the first direction, and preferably, the first actuation interface or the second actuation interface is configured to receive the rotatory driving force as a torsional force resulting in a rotational speed of the first actuation interface or the second actuation interface.

Preferably, the transformation unit is configured as a motion thread, in particular a screw spindle, in particular a ball screw spindle, or the spindle nut is rotationally locked with the first actuation interface and the spindle shaft is rotationally locked with the second actuation interface.

This allows providing a braking system exhibiting arbitrarily high transmission ratios between an actuating force and a brake force.

Preferably, the spindle nut acts on the transfer element such that it is moved between the locking position and the release position.

Preferably the spindle nut is rotationally locked with the first actuation interface and the spindle shaft is rotationally locked with the second actuation interface in a manner that a spindle nut rotation ratio between the first actuation interface and the spindle nut is different from a spindle shaft rotation ratio between the second actuation interface and the spindle shaft.

Preferably, the braking system further comprises an actuating device and the first actuation interface and the second actuation interface are actuated by that actuating device as shared actuating device.

By that, only one actuating device is required and nevertheless, the desired transmission ratios can be achieved.

Preferably the braking system comprises a first actuating device and a second actuating device, wherein the first actuation interface is driven by the first actuating device and the second actuation interface is driven by the second actuating device.

By that, the transmission ratio can be defined freely already during operation of the vehicle.

Preferably, the actuating device or the actuating devices is/are rotational actuating devices, in particular an electric motor, pneumatic motor, hydraulic motor or rotational spring.

Preferably, the actuating device or the actuating devices is/are linear actuating devices, in particular a pneumatic cylinder, a hydraulic cylinder, linear electric motor or a spring loaded cylinder.

Preferably, the transformation unit comprises a clutch that is configured to lock a rotation of the screw spindle relative to the screw nut or locks the rotation of a driving motor.

Preferably, the screw spindle is configured such that it exhibits self-locking against the brake force Fb.

Preferably, the transfer member is spring loaded towards a friction element.

According to a further aspect of the invention, disclosed is a commercial vehicle comprising the brake system of any of the previous aspects.

The vehicle is preferably configured as a truck, a trailer and/or a combination of a towing vehicle and a trailer. Preferably, the vehicle is configured as an electric vehicle, in particular a battery electric or fuel cell electric vehicle, a hybrid or a conventional vehicle.

In the following, the invention is explained by means of embodiments and the figures.
**Figure 1** exhibits a braking system according to a first embodiment.
**Figure 2** exhibits a braking system according to a second embodiment.
**Figure 3** exhibits a braking system according to a third embodiment.
**Figure 4** exhibits a braking system according to a fourth embodiment.
**Figure 5** exhibits a braking system according to a fifth embodiment.

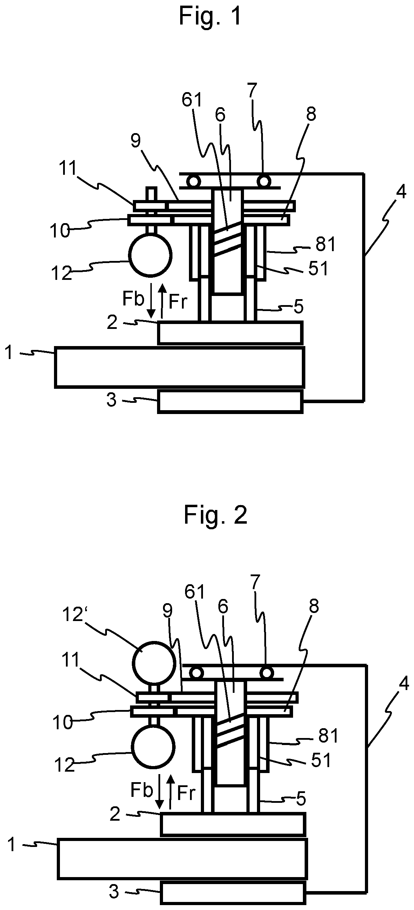

A first embodiment of the invention is explained by means of **Fig. 1****.**

**Fig. 1** exhibits a schematic drawing of a brake system of a commercial vehicle. The brake system is configured as secondary brake system. A brake disc 1 is, either directly or indirectly via a hub, connected to a wheel of a commercial vehicle in a manner that it is static relative to the wheel and in particular rotates together with the wheel. Brake disc 1 represents a rotary friction element. A first brake pad 2 and a second brake pad 3 are provided in a manner that they are movable in a first direction towards and in a second direction obverse to the first direction away from the brake disc 1. The first brake pad 2 and the second brake pad 3 are arranged in a brake caliper 4 and are, either directly or indirectly, connected with the chassis of the commercial vehicle in a manner that they only move in the first direction or the second direction. In particular, the brake pads are not movable conjointly with the rotation of the brake disc 1, wheel or hub. In this embodiment, this is achieved by the arrangement of the first brake pad 2 and the second brake pad 3 in the caliper 4 in a manner only allowing movement in the first and second direction and by arranging the caliper at the chassis prohibiting rotation together with the brake disc 1, the hub or the wheel. First brake pad 2 and second brake pad 3 represent first and second static friction elements, respectively.

Via brake pads 2, 3, friction can be applied between the brake disc 1 and the brake pads 2, 3 when a brake force Fb is applied to the brake pads 2, 3 in the first direction. The applied friction basically is proportional to the applied brake force Fb.

A transfer element 5 is provided at the brake pad 2 and is configured to transfer the brake force Fb in the first direction to the brake pad 2 and a resetting force Fr in the second direction. The transfer element 5 is supported on brake pad 2 in a manner that the transfer element 5 may be rotated relative to the brake pad 2. In the first embodiment, the transfer element 5 is configured as a hollow member. The transfer element 5 comprises a spindle nut 51 such that an axial force can be transmitted between the transfer member 5 and the spindle nut 51. Inside the transfer element 5, and the spindle nut 51, there is provided a shaft 6 provided with a thread 61. Shaft 6 and spindle nut 51 act together as a ball screw spindle wherein the spindle nut 51 is configured as a ball spindle nut and the shaft 6 is configured as a ball spindle shaft. Although in the embodiment a ball screw spindle is employed, any other motion thread is applicable. The base of the shaft 6 is supported on one side of the caliper 4 by means of a ball bearing in this embodiment. However, any kind of rolling contact bearing allowing transmission of axial forces may be used, e.g. needle bearings.

When the spindle nut 51 and shaft 6 are rotated relative to each other in a first rotational direction, shaft 6 is extended from the transfer element 5, and the shaft 6 is supported by the one end of the caliper 4 via the ball bearing, and the brake force Fb is exerted towards the first brake pad 2. Brake pad 2 is consequently displaced relatively towards brake disc 1. Brake disc 1 is displaced relatively towards the second brake pad 3 that is supported by the other end of the caliper. By that, first brake pad 2 and second brake pad 3 are pressed onto brake disc 1 by brake force Fb. Friction between the brake pads and the brake disc is generated. Transfer element 5 then is in a locking position. Brake force Fb is determined in particular by the torque applied relatively between transfer element 5 and shaft 6 and the thread lead of thread 61. A reduced lead results in an increased brake force Fb relative to the applied torque and in a reduced relative displacement of the shaft 6 relative to transfer element 5 and vice versa.

When the spindle nut 51 and the shaft 6 are rotated relative to each other in a second rotational direction that is obverse to the first rotational direction, shaft 6 is retracted into the transfer element 5. By that, the first brake pad 2 and the second brake pad 3 are moved away relatively to brake disc 1. Transfer element 5 then is in a release position.

A spindle nut gear 8 is fixed via a sleeve 81 to the spindle nut 51 in a manner that torque and rotational speed applied to nut gear 8 are transmitted to the spindle nut 51. Spindle nut gear 8 engages a nut actuation gear 10. Nut actuation gear 10 serves as a first actuation interface.

A spindle shaft gear 9 is fixed to the shaft 6 in a manner that torque and rotational speed applied to the shaft gear 9 are transmitted to the shaft 6. Spindle shaft gear 9 engages a shaft actuation gear 11. The shaft actuation gear 11 serves as a second actuation interface.

The nut actuation gear 10 and the shaft actuation gear 11 are directly driven by an electric motor 12. The electric motor 12 serves as actuating device. Thus, the same torque and the same rotational speed are applied to the nut actuation gear 10 and the shaft actuation gear 11. Since a nut gear transmission ratio of the nut actuation gear 10 and the spindle nut gear 8 is different from a shaft gear transmission ratio of the shaft actuation gear 11 and the spindle shaft gear 9, applying rotation by electric motor 12 results in a difference of rotational speed of the spindle nut gear 8 relative to the spindle shaft gear 9. The closer the nut gear transmission ratio and the shaft gear transmission ratio are, the larger the brake force Fb becomes relative to the torque applied by the electric motor 12 and the smaller the displacement of the shaft 6 becomes relative to the transfer element 5. Thus, a very high total transmission ratio and very subtle displacements are achievable.

To fulfill the function of a secondary brake, in particular to maintain a vehicle's position in a non-operating state, in particular in during non-driving operations of the vehicle, the shaft transmission ratio and the nut transmission ratio are chosen to be close enough so that there occurs self-locking against the brake force Fb.

A second embodiment of the invention is explained by means of **Fig. 2****.**

**Fig.** 2 exhibits a schematic drawing of a brake system of a commercial vehicle. The brake system of the second embodiment equals to the brake system of the first embodiment in all aspects except for the deviations described below.

Contrary to the first embodiment, the nut gear transmission ratio is configured to be equal to the shaft gear transmission ratio. Further, the electric motor 12 only drives the first actuation interface. A second electric motor 12' is provided and drives the second actuation interface. Thus, the total transmission ratio between the rotation applied by electric motor 12 and the displacement of the shaft 6 relative to the transfer element 5 depends on the rotation applied by the second electric motor 12'. The closer the rotation applied by the second electric motor 12' becomes to the rotation applied by the electric motor 12, the larger the transmission between the rotation applied by the electric motor 12 and the the displacement of the shaft 6 relative to the transfer element 5 becomes. Thus, very subtle displacements can be achieved resulting in a very high brake force Fb. Further, by enlarging the differences in rotation applied by both electric motors, or even by applying counter rotations, large displacements of the shaft 6 relative to the transfer element 5 and thus quick adjustments are achievable.

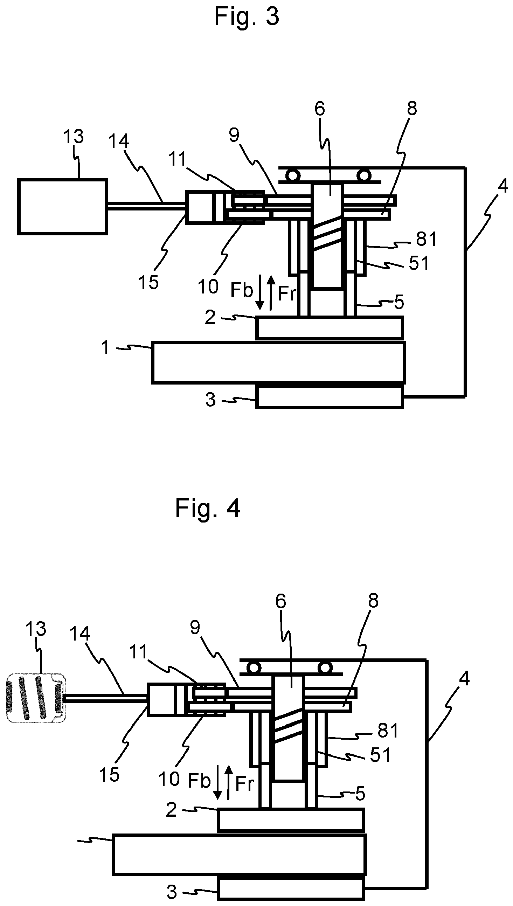

A third embodiment of the invention is explained by means of **Fig.** 3.

**Fig.** 3 exhibits a schematic drawing of a brake system of a commercial vehicle. The brake system of the third embodiment equals to the brake system of the first embodiment in all aspects except for the deviations described below.

In this embodiment, the electric motor 12 is replaced by a linear actuating device 13. Actuating device 13 is configured to provide a linear actuating input instead of a rotational actuating input of the electric motor 12. In this embodiment, actuating device 13 is implemented as a pneumatic cylinder. The pneumatic cylinder 13 is connected to a gear rod 15 via a rod 14 in a manner that a longitudinal displacement is transferred to a gear rod 15. Gear rod 15 engages with the first actuation interface. Thus, actuating force Fa is converted in brake force Fb according to the same transmission ratio principles than in the first embodiment. In particular, there occurs a rotation of the actuation force by 90° with respect to the brake force. This allows accommodation in areas where there is limited space perpendicular to the brake disc 1.

A fourth embodiment of the invention is explained by means of **Fig. 4****.**

**Fig.** 4 exhibits a schematic drawing of a brake system of a commercial vehicle. The brake system of the fourth embodiment equals to the brake system of the third embodiment in all aspects except for the deviations described below.

In this embodiment, the pneumatic cylinder is replaced by a spring cylinder and forms a linear actuator 13.

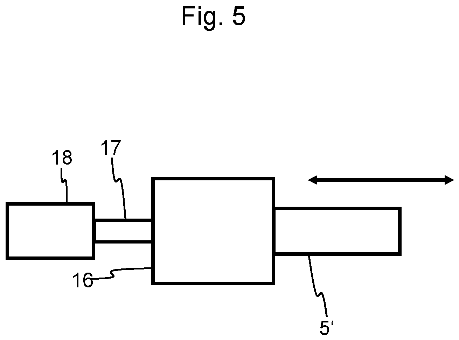

A fifth embodiment of the invention is explained by means of Fig. 5.

**Fig.** 5 exhibits a schematic drawing of a brake system of a commercial vehicle. The brake system of the fifth embodiment equals to the brake system of the first embodiment in all aspects except for the deviations described below.

A transfer member 5' is moved by the ball screw spindle of the first embodiment. Rotation and torque is provided by a pneumatic motor 16. A torque transmission rod 17 is connected with the spindle shaft 6 in a manner that torque and rotation of the spindle are transmitted to a clutch 18 that is configured as a shape locking clutch. In operation, the brake force Fb is generated by rotation of pneumatic motor 16. In the locking position, clutch 18 engages and maintains the transfer member 5' in the locking position, even if the pneumatic motor 16 is depressurized.

The invention was described by means of embodiments. Each embodiment is only of explanatory nature and does not restrict the invention as defined by the claims. As recognizable by the skilled person, deviations from the embodiments are possible without leaving the invention that is defined according to the scope of the claimed subject-matter.

In the first embodiment and the second embodiment, electric motors are described as actuating devices. However, any actuating device providing torque or rotation can be applied, e.g. pneumatic or hydraulic motors.

In the third and fourth embodiment, pneumatic cylinders and spring cylinders are described as linear actuating devices. However, any linear actuating device, e.g. hydraulic or electromagnetic linear actuating devices are applicable.

In the embodiments, the braking system is configured as a separate secondary braking system. However, the braking system also may be provided as a main braking system or may serve as main braking system and secondary braking system. Alternatively, the braking system may act on a main braking system, e.g. by applying force Fb to an actuator or directly or indirectly to a friction element of the main braking system.

In the embodiments, the brake force FB is only provided by the transfer mechanism. However, the transfer member 5 may be spring loaded by a spring towards the first brake pad 2. This allows maintaining of the brake force Fb even in a state of heat induced shape changes of the braking system, even in a deactivated state of the actuating devices.

A commercial vehicle in the sense of this document is any vehicle, either self-driven or towed, for transporting goods or freight. These are in particular HGV, trucks, tractor units or trailers.

A main brake system in the sense of this document is a brake system that is configured to serve for vehicle deceleration during operation, in particular during movement of the vehicle.

A secondary brake system in the sense of this document is a brake system that is configured to serve as a backup for the main brake system and that is configured to provide a continuous locking function to maintain a vehicle's position.

A rotatory drive in the sense of this invention is a drive transmitting torque or rotational speed. Driven in a rotatory manner means receiving torque or rotational speed.

In this document, the terms "and", "or" and "either... or" are used as conjunctions in a meaning similar to the logical conjunctions "AND", "OR" (often also "and/or") or "XOR", respectively. In particular, in contrast to "either... or", the term "or" also includes occurrence of both operands.

Method steps indicated in the description or the claims only serve an enumerative purpose of the method steps. They only imply a given sequence or an order where their sequence or order is explicitly expressed or is - obvious for the skilled person - mandatory due to their nature. In particular, the listing of method steps do not imply that this listing is exhaustive. Also, not all method steps described in an embodiment are required to implement the invention. The required method steps are defined by the claims only.

In the claims, the word "comprising" does not exclude other elements or steps, and the indefinite article "a" or "an" does not exclude a plurality and has to be understood as "at least one".

### LIST OF REFERENCE NUMBERS

- 1: brake disc, rotary friction element
- 2: first brake pad, first stationary friction element
- 3: second brake pad, second stationary friction element
- 4: caliper
- 5: transfer element
- 51: spindle nut
- 6: shaft, spindle shaft
- 61: thread
- 7: ball bearing
- 8: spindle nut gear
- 81: sleeve
- 9: spindle shaft gear
- 10: nut actuation gear, first actuation interface
- 11: shaft actuation gear, second actuation interface
- 12: electric motor, actuating device
- 12': second electric motor
- 13: pneumatic cylinder, linear actuating device
- 14: rod
- 15: gear rod
- 16: pneumatic motor
- 17: torque transmission rod
- 18: clutch, shape locking clutch

## Claims

1. A braking system for a commercial vehicle, comprising:
a transfer element (5) movable between a brake position and a release position, the transfer element (5) being configured to set a wheel braking mechanism (1, 2, 3) in a braking state and to release the wheel braking mechanism (1, 2, 3) in the release position,
a first actuation interface (10) configured to be driven in a rotatory manner,
a second actuation interface (11) configured to be driven in a rotatory manner,
a transformation unit (51, 6, 61, 8, 9) arranged between the transfer element (5) and the first actuation interface (10),
wherein the transformation unit (51, 6, 61, 8, 9) is configured
to transform the rotatory drive received by the first actuation interface (10) into a translational displacement of the transfer element (5) and a brake force (Fb), and
to alter the transformation ratio of the rotatory drive received by the first actuation interface (10) into a translational displacement of the transfer element (5) in accordance to the rotational speed of the second actuation interface (11).

2. The braking system according to the previous claim, wherein the transfer element (5) is movable from the release position to the locking position in a first direction and from the locking position to the release position in a second direction obverse to the first direction.

3. The braking system according to any of the previous claims, wherein the first actuation interface (10) and/or the second actuation interface (11) are configured to be driven in a rotatory manner such as to receive a torque resulting in a rotational speed of the first actuation interface and/or the second actuation interface.

4. The braking system according to any of the previous claims, wherein
the transformation unit comprises a motion thread (51, 6, 61), in particular a screw spindle, in particular a ball screw spindle, and
the spindle nut (51) is rotationally locked with the first actuation interface (10) and the spindle shaft (6) is rotationally locked with the second actuation interface (11).

5. The braking system according to the previous claim, wherein the spindle nut (51) acts on the transfer element (5) such that it is moved between the locking position and the release position.

6. The braking system according to claims 4 or 5, wherein the spindle nut (5) is rotationally locked with the first actuation interface (10) and the spindle shaft (6) is rotationally locked with the second actuation interface (11) in a manner that a spindle nut rotation ratio between the first actuation interface (10) and the spindle nut (51) is different from a spindle shaft rotation ratio between the second actuation interface (11) and the spindle shaft (6).

7. The braking system according to the previous claim, wherein the braking system further comprises an actuating device (12, 12', 13) and the first actuation interface (10) and the second actuation interface (11) are actuated by that actuating device as a shared actuating device.

8. The braking system according to claims 4 to 6, wherein the braking system comprises a first actuating device (12) and a second actuating device (12'), wherein the first actuation interface (10) is driven by the first actuating device (12) and the second actuation interface (11) is driven by the second actuating device (12').

9. The braking system according to claim 7 or 8, wherein the actuating device (12, 13) or the actuating devices (12, 12') are rotational actuating devices, in particular an electric motor, pneumatic motor or hydraulic motor.

10. The braking system according to claim 7 or 9, wherein the actuating device (12, 13) or the actuating devices (12, 12') are translational, in particular linear, actuating devices, in particular a pneumatic cylinder, a hydraulic cylinder or a spring loaded cylinder.

11. The braking system according to any of claims 4 to 10, wherein the transformation unit (51, 6, 61) comprises a clutch (18) that is configured to lock a rotation of the screw spindle (6) relative to the screw nut (51).

12. The braking system according to claims 4 to 11, wherein the motion thread (51, 6, 61) is configured such that it exhibits self-locking against the brake force Fb.

13. The braking system according to any of the previous claims, wherein the transfer member (5) is spring loaded towards a friction element (2).

14. A commercial vehicle, in particular an electric vehicle, in particular a battery electric or fuel cell electric vehicle, or hybrid vehicle, comprising the brake system of any of the previous claims.
